# EUROPEAN PATENT SPECIFICATION

(11) **EP 1 201 061 B1**
(45) Date of publication and mention of the grant of the patent: **17.08.2005**
(21) Application number: 00938372.0
(22) Date of filing: 07.06.2000
(51) Int. Cl.: H04L 12/56, H04L 12/18, H04L 12/46

(54) **SYSTEM AND METHOD FOR LOOP AVOIDANCE IN MULTI-PROTOCOL LABEL SWITCHING**
VERFAHREN UM IM MULTI-PROTOCOL LABEL SWITCHING SCHLEIFEN ZU VERMEIDEN
SYSTEME ET PROCEDE D'EVITEMENT DE BOUCLE DANS UNE COMMUTATION PAR ETIQUETTE MULTIPROTOCOLE

(30) Priority: 07.06.1999 US 137717 P
(43) Date of publication of application: 02.05.2002
(73) Proprietor: Nortel Networks Limited, St. Laurent, Quebec H4S 2A9 (CA)
(72) Inventor: LEE, Cheng, Yin, Ottawa, Ontario K2B 6AF (CA); ANDERSSON, Loa, S-125 33 Slus (SE)
(74) Representative: Mackenzie, Andrew Bryan
(86) International application number: PCT/CA2000/000665
(87) International publication number: WO 2000/076126

(56) References cited:
- OHBA ET AL.: "MPLS Loop Prevention Mechanism" [Online] May 1999 (1999-05) , IETF , INTERNET XP002161484 Retrieved from the Internet: <URL: ftp://ftp.informatik.uni-bremen.de/pub/doc /internet-drafts/draft-ietf-mpls-loop-prev ention-01.txt> [retrieved on 2001-02-27] page 1, line 28 - line 38 page 29, paragraphs A.1-A.2 -page 30
- ANDERSSON ET AL.: "LDP Specification" [Online] May 1999 (1999-05) , IETF , INTERNET XP002161485 Retrieved from the Internet: <URL: ftp://ftp.informatik.uni-bremen.de/pub/doc /internet-drafts/draft-ietf-mpls-ldp-04.tx t> [retrieved on 2001-02-27] page 1, line 31 -page 2, line 4 page 24, paragraph 2.8 -page 27, paragraph 2.8.2

## Description

### BACKGROUND OF THE INVENTION

### Field of invention

The present invention relates in general to digital communication methods and systems, and in particular to a method for preventing the formation of loops in label switched paths in a multi-protocol label switching (MPLS) communications environment.

### Related art

A host node initiating a transmission of a data packet to another node in the network is called the source node. The host node which receives the data packet is called the destination node. Thus, a host node may initiate transmission or receive data, whereas a router can only receive and retransmit data. Establishing communications between a single source node and a single destination node is achieved through a process called unicast routing.

Multicasting is defined as a communications process involving one or more senders and receivers. Information transmitted by any participant in the multicast is received by every other participant in the multicast. Users connected to the network who are not participants in a particular multicast do not receive the information transmitted by any of the senders and no network components, e. g. switches or trunks, are used are used unless needed for the multicast. For example, broadcast involving one sender and many receivers is a particular case of multicasting and may include wide-area broadcast, e. g. TV and radio, narrowcast for smaller areas, and conferencing with selected numbers of transmitters and receivers across a wide area.

For performing a multicast conversation in a network, the switches elect a single switch among all the switches within each network to be the "root" switch. Each switch has a unique identifier (switch ID) and the root may be the switch having the lowest switch ID. At each switch, a "root port" which gives the fewest number of hops from this switch to the root is selected, while ports not included within the spanning tree are blocked. At the root, all ports are placed in the forwarding state. For each LAN coupled to more than one switch, a "designated" switch, typically the one closest to the root, is elected to ensure connectivity to all LANs.

A standard spanning tree procedure has been defined for network bridging devices (bridges, routers, switches) to enable these devices to discover a subset of any topology that forms a loop-free (i.e. tree) and yet connects every pair of local area networks (LANs) within the network (i.e. spanning). The spanning tree procedure results in a network path between any two bridging devices which is updated dynamically in response to network modifications. For example, switches exchange configuration messages called bridge protocol data units (BPDUs) frames, which allow them to calculate the active topology, or the spanning tree by blocking all redundant links and leaving a single communications path.

A plurality of switches interconnected by trunks may be arranged to form a spanning tree, or a multicast distribution tree (MDT). If host nodes A and B wish to set up a multicast transmission using a previously agreed multicast address "M", a control packet containing source address "A" and destination address "M" is transmitted in the network. Entries are added at each switch where the control packet arrives and then deleted after the defined time interval (MaxTime) if the entries are not reinforced from hosts A and B. When another host wants to join a multicast transmission, even if it is the first participant, it simply transmits a JOIN request control packet from itself to the "M" address. The JOIN request is broadcasted over the entire spanning tree and the joining host continues to send packets to the "M" address with a maximum inter-packet time interval smaller than MaxTime to make sure that at least one of the relevant table entries is not cleared.

A new branch in a multicast distribution tree (MDT) is formed by transmitting a JOIN REQUEST control packet from a node, or a subtree that wishes to join the group. The multicast tree sends back a JOIN ACKNOWLEDGMENT (JOIN-Ack) control packet in the opposite direction. It is possible to transmit only the JOIN request and each node not already in the multicast tree which receives the JOIN request is directly attached to the tree. However, the use of JOIN-Ack provides some ability to prevent loops from occurring.

A loop is a circular path which causes a packet to return to originating node on the same path the packet was transmitted. The existence of redundant communications paths, especially in meshed networks, may cause the undesirable formation of "loops" resulting in proliferation of data frames along loops. As well, the expansion of networks often results in loops that cause undesired duplication and transmission of network packets, such as broadcast storm as well as address conflict problems.

When a node attempts to re-join the group, the node generates a JOIN request control packet with a set active flag and a set re-join flag. When this packet is received at a member node, the receiving node clears the active flag and transmits a JOIN-Ack back to the node which generated the JOIN request, and retransmits copies of the JOIN request to each member node. Member nodes receiving the copy of the JOIN request control message retransmit copies of the received JOIN request to other member nodes, except the node from which the packet was received.

If the JOIN request control packet returns to the originating node wishing to re-join, then a loop exists and includes only member nodes. The originating node has to transmit a QUIT request control packet, and re-attempt to join after a preset waiting period.

It is desired to detect problematic links or loops that can cause problems and undermine the purpose of the spanning tree. Generally, most unicast algorithms provide for loop prevention when forming unicast routing paths between each node and storing these paths in the forwarding tables. When a loop is created, the unicast algorithms detects and removes such loop by revising the paths contained in these loops. Even transient loops can disrupt the construction of the multicast distribution tree (MDT).

As Intemet communications increase, it has become apparent that competing network layer protocols, such as the Internet Protocol (IP), Asynchronous Transfer Mode (ATM) and Frame Relay (FR), need to interoperate to forward packets. The Multi-Protocol Label Switching (MPLS) has been developed to work with any network layer protocol.

Under a conventional connectionless network layer protocol such as IP, a data packet is forwarded from one router to another as the data packet travels from its start to its destination. As the data packet is forwarded, each router makes an independent forwarding decision for that data packet by analyzing the packet's header and running a network layer routing algorithm. Each router then independently chooses a next hop for the data packet, based on its analysis of the packet's header and the results of the running routing algorithm. To choose the next hop for a data packet involves two steps. The data packets are first partitioned into forwarding equivalence classes (FECs). Secondly, each forwarding equivalence class is mapped to a next hop.

As far as the forwarding decision is concerned, different data packets that are partitioned into the same FEC are indistinguishable, and all data packets that belong to a particular FEC and traveling from a node, follow the same path (or one of the set of paths) associated with this particular forwarding equivalence class (FEC).

A typical router considers two data packets to be in the same forwarding equivalence class (FEC) if there is an address prefix in that router's routing tables that is the longest match for each data packet's destination address. As the data packet traverses the network, each hop in turn reexamines the packet and assigns it to a forwarding equivalence class (FEC).

By contrast, in multi-protocol label switching (MPLS) the assignment of a data packet to a particular forwarding equivalence class (FEC) is done just once when the packet enters the network. The FEC to which the data packet is assigned is encoded as a short, fixed length value known as label.

When a data packet is forwarded to its next hop, the label is sent along with it. Thus, the packets are "labeled" before they are forwarded. At subsequent hops, there is no further analysis of the packet's network layer header. Instead, the label is used as an index into a table that specifies the next hop, and the new label to be assigned. The old label is replaced with the new label, and the packet is forwarded to the next hop. A router that supports multi-protocol label switching is known as a label switching router (LSR).

The multi-protocol label switching (MPLS) has a number of advantages over conventional network layer forwarding protocols. First, MPLS forwarding can be done by switches that are capable of doing label lookup and label replacement, but are either not capable of analyzing the network layer headers, or are not capable of analyzing the network layer headers at adequate speed.

Secondly, since a data packet is assigned to a FEC when it enters the network, an ingress router can use any information it has about the packet to determine the assignment, even if that information cannot be determined from the network layer header. For example, data packets arriving on different ports can be assigned to different forwarding equivalence classes (FECs).

In MPLS, a data packet that enters the network at a particular router can be labeled differently than the same packet entering the network at a different router. As a result, forwarding decisions that depend on the ingress router can be easily made. This functionality cannot be achieved with conventional forwarding, since the identity of a data packet's ingress router does not travel with the packet. (Conventional forwarding can only consider information that travels with the packet in the packet header).

Finally, for purposes of traffic engineering, it is sometimes desirable to force a packet to follow a constraint route which may be explicitly chosen at or before the time the packet enters the network. In conventional forwarding, this requires that the packet carry a source routing. In MPLS, a label can be used to represent the route, so that the identity of the explicit route need not be carried with the packet.

A disadvantage of the MPLS is the possible creation of loops, due to independent labeling decisions made at each router. Loops can cause severe degradation of a label switched router (LSR) overall performance. Generally, loop detection procedures are used to eliminate looping label switched paths in MPLS.

One method of loop detection in multi-protocol label switching (MPLS) uses the time-to-live (TTL) value carried in a packet's header. In conventional IP forwarding, each packet carries a TTL value in its header. Whenever a packet passes through a router, its TTL is decremented by 1. If the TTL reaches 0 before the packet has reached its destination, the packet is discarded. This provides some level of protection against forwarding loops that may exist due to misconfigurations, or due to failures, or the slow convergence of a routing algorithm. However, certain communication systems are unable to support a TTL function. For example, ATM switching hardware cannot decrement TTL, thus there is no protection against looping packets.

Since there is no explicit loop avoidance mechanism in the current MPLS-label distribution protocol (LDP), data may be already looping before the loops are detected. Loops are always undesirable, and more so on a multicast distribution tree (MDT). In particular, loops in a multicast point to multipoint (p2mp) tree are harmful, as the packets are replicated and in the event of loops, multiple copies are generated at each loop. Multicast routing loops can affect a large number of nodes in a network in a short period of time and need to be detected, and ideally prevented before network failure or a long lasting damage occur.

One method of loop avoidance has been proposed in Y. Ohba, Y. Katsube, E. Rosen, P. Doolan, "MPLS Loop Prevention Mechanism", October 1999, an IETF Internet-Draft that can be found at "draft-ietf mpls-loop-prevention-02.txt". Ohba et al. present a mechanism, based on "threads", that can be used to prevent MPLS from setting up label switched paths that contain loops. When a label switched router (LSR) finds that the next hop for a particular FEC has changed, it creates a thread and extends it downstream. Each such thread is assigned a unique "color", such that no two threads in the network can have the same color. For a given label switched path, once a thread is extended to a particular next hop, no other thread is extended to that next hop, unless there is a change in the hop count from the furthest upstream node.

The only state information that needs to be associated with the next hop for a particular label switched path is the thread color, and the hop count. If there is a loop, then some thread will arrive back at a label switched router (LSR) through which it has already passed. Such an event will be detected, since each thread has a unique color.

However, the proposed colored thread method of loop prevention has certain disadvantages. In particular, this method requires additional information especially the color to be added to the label which increases the size of each packet. Further, the loop prevention mechanism proposed by Ohba et al. does not separate the function of loop prevention from the label request message looping prevention, nor the label mapping from the label splicing function.

It is, therefore, desirable to provide method and system for preventing the creation of looping label switched paths in a MPLS environment that is reliable and requires a low router overhead.

### SUMMARY OF THE INVENTION

The present invention seeks to overcome the disadvantages of the prior art associated with loop avoidance in a MPLS environment.

In a first aspect, the present invention provides a method for preventing routing loops from forming when grafting a joining node to a multi-protocol label switching (MPLS) tree, characterized by that the method comprises: a) obtaining at a label switching router (LSR) a label mapping for a forwarding equivalence class (FEC); b) determining if previous bindings exist for said FEC, where if yes, go to step c), and if no, go to step h); c) sending a label splice message (Lsm) from said LSR toward the root node of the MPLS tree; d) determining if said LSR is a root-LSR or not, where if yes, go to step e) and if no, go to step i); e) returning a label splice acknowledgment (SPLICE-ACK) message to said LSR (110); f) determining if said SPLICE-ACK message is received, where if yes, go to step g), and if not, go to step a) (108); g) accepting said label mapping (106); h) determining if said joining node is a single node or a node of a substree, where said joining node is a single node, go to step g), and if said joining node is a node of a subtree, go to step c) (104); i) determining if said LSR is waiting for a previous SPLICE-ACK message where if yes, go to step j), and if no, go to step k) (116); j) terminating any further action (118); and k) forwarding said Lsm to a next LSR (120).

The present is not limited to the features disclosed in the "Summary of the Invention" section; it nonetheless may reside on sub-combinations of the disclosed features.

### BRIEF DESCRIPTION OF THE DRAWINGS

Preferred embodiments of the present invention will now be described, by way of example only, with reference to the attached Figures, wherein:
Figure 1 is a block diagram of a network communications system;
Figure 2 is a schematic representation of a multipoint to point tree;
Figure 3 is a schematic representation of a point to multipoint tree;
Figure 4 illustrates the grafting of a node to a MPLS trees a
Figure 5 illustrates the grafting of a subtree to a MPLS tree;
Figure 6 illustrates loop avoidance for splicing subtrees using label splice and the acknowledgement messages, according to the invention;
Figure 7 illustrates the loop avoidance mechanism for splicing nodes, according to the invention;
Figure 8 illustrates loop avoidance mechanism for splicing a node with a member node waiting to receive SPLICE-acknowledgement message to a previous transmitted label splice message, according to the invention; and
Figure 9 is a flow chart illustrating the loop avoidance mechanism according to the invention.

Similar references are used in different figures to denote similar components.

### DETAILED DESCRIPTION OF THE INVENTION

The following description relates to preferred embodiments of the invention by way of example only and without limitation to the combination of features necessary for carrying the invention into effect.

The present invention is directed to a method and system to avoid routing loops when setting up label switched paths, by verifying that the path towards the root of a MPLS tree is loop free before a node is grafted to the tree. The present invention is applicable to both unicast and multicast label path setup, and is intended to complement the loop detection mechanism available for example in MPLS-LDP. The method according to the invention, may be used with ATM-label switching and FR-label switching router networks, or any other networks where multicast label switching is supported.

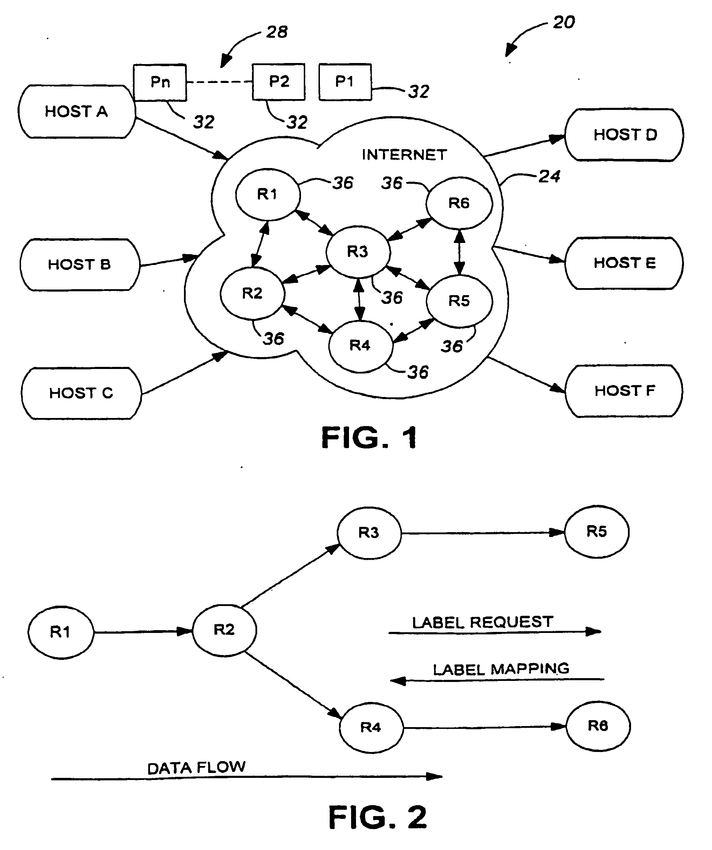

A system according to the present invention is shown in Fig. 1 and generally designated at **20.** In this example, system **20** consists of host nodes A, B, C, D, E and F interconnected through a multi-protocol label switching (MPLS) network **24.** To communicate and share information, host nodes A and D, for example, pass messages, in the form of a digital byte stream **28,** through network **24.** Byte stream **28** is broken into data packets **32.** To ensure that data packets **32** are correctly and efficiently routed from host A to host D, they are typically routed through one or more label switching routers (LSRs) **36.** LSRs **36** can operate with various network protocols, such as Intemet Protocol (IP), Asynchronous Transfer Mode (ATM) and Frame Relay (FR).

In system **20**, a short, fixed length, locally significant identifier, known as a label, is attached to each packet **32** to identify its FEC. Most commonly, a data packet **32** is assigned to a FEC based on its destination address.

A "labeled packet" is a packet into which a label has been encoded. In some cases, the label resides in an encapsulation header which exists specifically for this purpose. In other cases, the label may reside in an existing data link, or network layer header as long as there is a field which is made available for that purpose. The particular encoding technique to be used must be agreed to by both the entity which encodes the label and the entity which decodes the label.

In MPLS networks, data flows from an upstream node, or LSR-Ru, to a downstream node, or LSR-Rd: When Ru transmits a data packet to Rd, Ru labels the packet with "L" if the packet is a member of a particular FEC "F". That is, they can agree to a "binding" between the label "L" and the forwarding equivalence class "F" for packets moving from Ru to Rd.

In this way, "L" becomes Ru's outgoing label representing the forwarding equivalence class "F", and "L" also becomes Rd's incoming label representing the forwarding equivalence class "F". ("L" represents the forwarding equivalence class "F" for data packets sent from Ru to Rd, and is an arbitrary value whose binding to "F" is local to Ru and Rd).

In the MPLS architecture, the decision to bind a particular label "L" to a particular forwarding equivalence class (FEC) "F" is made by the label switching router (LSR) which is downstream (Rd) with respect to the binding. The downstream label switching router (Rd) informs the upstream label switching router (Ru) of the binding. Thus labels are downstream-assigned, and label bindings are distributed in the downstream to upstream direction. For example, upstream router Ru can request (using a label request message), a label to be used when forwarding packets of a particular forwarding equivalence class (FEC). Downstream router Rd then informs, the upstream router Ru (via a label mapping), what label it should use. It is to be noted that Rd may distribute such a label to Ru without any prompting, e.g. without a label request from Ru.

A label switching router (LSR) informs other LSRs about the existing label/forwarding equivalence class (FEC) bindings created by the label distribution protocol (LDP). A number of different label distribution protocols (LDPs) are presently being standardized, including MPLS-BGP (MPLS-border gateway protocol), MPLS-RSVP (MPLS-reservations), MPLS-RSVP-TUNNELS, MPLS-LDP, and MPLS-CR-LDP. The method of the present invention will be described herein with respect to MPLS-LDP, but is equally applicable to other protocols that wish to set up loop-free MPLS trees, particularly the reservations (RSVP) protocol and the multicast routing protocol (MRP).

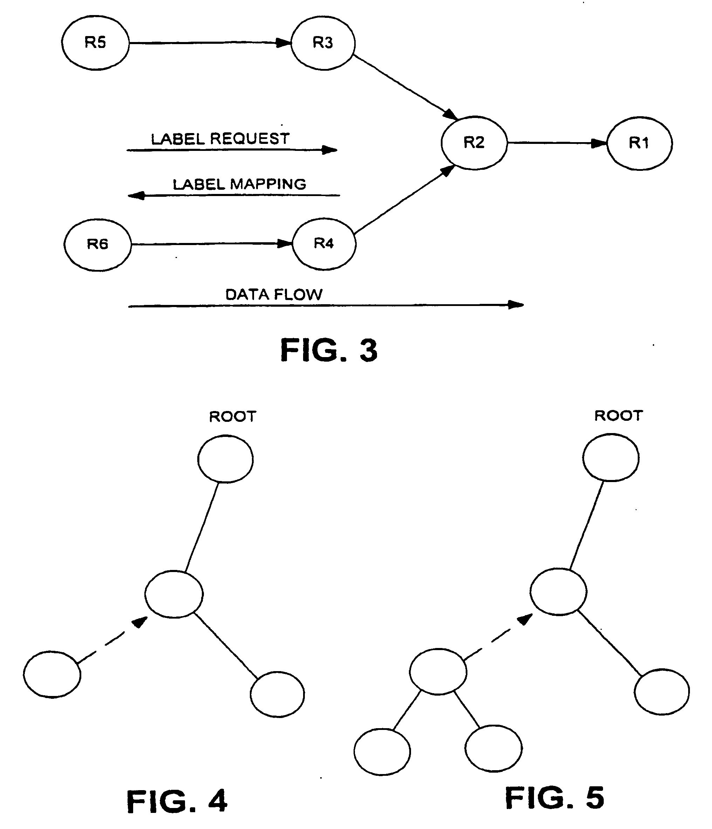

Examples of MPLS trees are illustrated in Figures 2 and 3. When unicast flows are aggregated towards an egress LSR, a MPLS multipoint to point (mp2p) tree is set up. A MPLS-(mp2p) tree is shown in Figure 3 where R4 is the downstream router (Rd) and R6 is the upstream router Ru.

Conversely, when multicast flows are distributed from an ingress LSR, a MPLS-(p2mp) or point-to-multipoint tree, as shown in Figure 2, is set up. In this case, R4 is the upstream router and R6 is the downstream router.

A multicast tree may be a source tree, a unidirectional shared tree, or a bidirectional shared tree. In the case of a source tree, the root of the MPLS tree is the ingress LSR of the source tree.

In the case of a unidirectional shared tree, the root of the MPLS tree is either the core node (such as a Rendezvous Point in protocol independent multicast sparse mode (PIM-SM)), or the ingress LSR of the MPLS tree, if the core node is not included in the MPLS tree.

In the case of bi-directional shared (multicast) trees, data flows towards R1 as well as away from R1. In the case of a bidirectional shared tree, such as a core based tree (CBT), the root of the MPLS tree is either the core node (the CBT core node), or the LSR that is nearest to the core node, if the core node is not included in the MPLS tree.

A label switched path is a sequence of label switching routers (LSRs) and the particular FEC, as it travels from hop to hop toward its destination. Generally, a label switching router (LSR) is attached to a MPLS tree after receiving a label mapping message from a member downstream neighbouring node. There are two distinct cases to consider:
(a) attaching a single node to a tree as illustrated in Figure 4; and
(b) attaching a sub-tree, to another tree as illustrated in Figure 5.

It is to be noted that when grafting a subtree to a MPLS tree, the "loop avoidance mechanism" has to be invoked. Regardless of whether it is unicast or multicast labeled switched path, grafting a node or a subtree to a MPLS tree has to be done without causing routing loops in the resulting tree.

According to the present invention, when a label switching router (LSR) is to be attached to a MPLS tree, the label switched path to the root of the MPLS tree is verified to be loop free before a label switched path is spliced with another label switched path. Avoiding loops according to the invention is performed independent of the direction of flow and the type of MPLS tree. Due to the label setup procedure, the role of the downstream and upstream LSR is reversed for the types of MPLS trees illustrated in Figures 2 and 3.

Upon either receiving (mp2p tree) or before sending (p2mp tree) a label mapping which has no binding yet, a label switching router Rx would verify whether there is a joining node or subtree. If there is a node, the label is accepted.

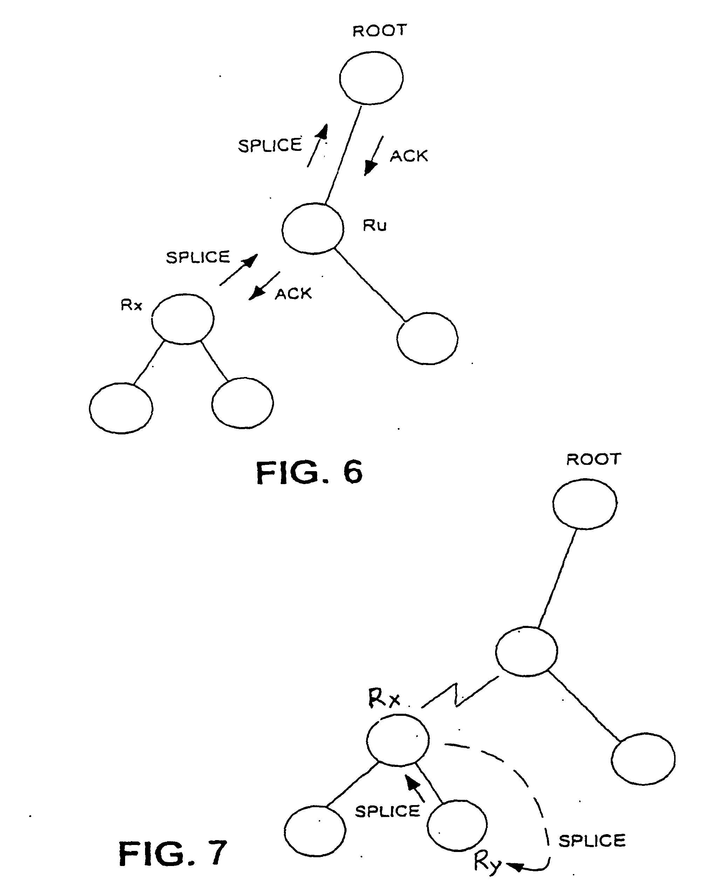

As shown in Figure 6, if there is a subtree Rx sends a label SPLICE message (Lsm) towards the ROOT. Lsm reaches an upstream node Ru which sends a label splice acknowledgment (SPLICE-ACK) message back to Rx. When SPLICE-ACK message is received the subtree can be grafted to the MPLS tree. The Lsm is forwarded towards the root of the MPLS tree, which is the egress LSR for (mp2p) and the ingress LSR for (p2mp), along the already labeled path. The last LSR (Ru) on the already established label switched path will send a label splice acknowledgment message (SPLICE-ACK) back on the same path the label splice message was sent. Once Rx receives the SPLICE-ACK , the label mapping is accepted (mp2p tree) or sent (p2mp tree). In other words, the sub-tree will be spliced with the tree.

As illustrated in Figure 7, if a Rx receives a label splice message from Ry and it already has a pending splice message, Ry knows there is a possibility of loop forming and takes appropriate action so that Rx does not receive the ACK, thereby preventing a looping label switched path from being established.

As mentioned before, Rx is the upstream router (Ru) for the MPLS (mp2p) tree case. For the MPLS (p2mp) tree case, Rx is the downstream router (Rd). When node Rx decides to attach to the MPLS tree, Rx sends a label splice message (Lsm).

Rx can infer from the forwarding equivalence class (unicast, or multicast address) the type of tree, i.e. (mp2p) tree or (p2mp) tree, it will be attaching to. If a node has no outstanding label splice message (Lsm) on the established path, then a node is in state "no splice". If a node in state "no splice" either starts to originate a label splice message or forwards a received label splice message, then the state changes to "splicing".

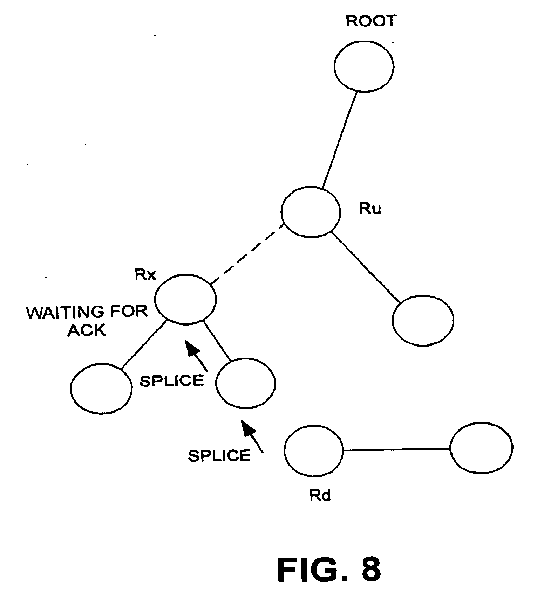

If while waiting for SPLICE-ACK message to return from Ru, node Rx receives a new label SPLICE message for example from node Rd, the new SPLICE is merged with the previous SPLICE, as illustrated in Figure 8.

If a node in state "splicing" receives a label splice message, the splice message is merged and the state changes to "merging splice". If a node in state "merging splice" receives a label splice message, the splice message is merged and the state does not change. If a node which is in state "splicing" receives a SPLICE- ACK, a SPLICE- ACK is returned to all the neighbors waiting for a SPLICE- ACK and the state changes to "no splice".

If a node which is in state "merging splice" receives a SPLICE-ACK, it sends a new label splice message (Lsm) and the state changes to "splicing".

If a node is in state "splicing" or "merging splice", and if the next hop towards the root changes, or if the SPLICE-ACK from the root gets lost, it immediately returns a SPLICE-ACK for each neighbor waiting for a SPLICE-ACK.

If the node becomes a new splicing point as a result of a change in the next hop towards the root, it should send a new splice message to the new next hop.

The above procedures are only necessary for merging label switching routers (LSRs) since labeled paths are never merged (spliced) by non-merging LSRs. Hence non-merging LSRs do not cause data to loop. A different label mapping is returned for each label requested, i.e. the labels are not merged.

There is a case in which a node in state "splicing" or "merging splice" receives a SPLICE-ACK which does not correspond to the latest splice message. In order to distinguish the latest SPLICE-ACK from old ones, each splice message contains a message identifier which is assigned by each node when the message is forwarded, and each SPLICE-ACK carries the message identifier contained in the corresponding splice message. In the case of LDP, the 32-bit Message ID field can be used for this purpose. Only the SPLICE-ACK for the latest splice message is treated as the valid one.

A merging label switching router (LSR) will not forward label request messages if there is already a pending label request for that FEC, but instead will attempt to merge the request once it receives the corresponding label mapping (in this case it will not receive the label mapping since the request message is looping). Hence a merging LSR will not cause a label request message to loop.

A non-merging LSR, however does not merge the label request message. It will provide a different label mapping for every label request message it receives and forwards the label request message to the egress router. Hence if there is a routing loop, a request message may loop indefinitely.

Looping control messages are less a threat compared to looping data packets. The LDP provides a mechanism to detect looping data packets and they should be adequate to deal with looping control messages as well.

The MPLS architecture allows labels to be used for data before the label switched paths have been completely setup. Ideally, labels should be used for multicast data forwarding only after the branch of a label switched path has been completely setup to reduce the effects of incorrectly labeled packets from being multicasted in a network.

Note that the Label Splice Mechanisms, however, are orthogonal to whether LSRs are using an independent control mode where labels can be used for data before the label switched paths have been completely setup, or an ordered control mode where a label is not distributed and used until an LSR receives the label mapping/binding for the corresponding FEC from its next hop.

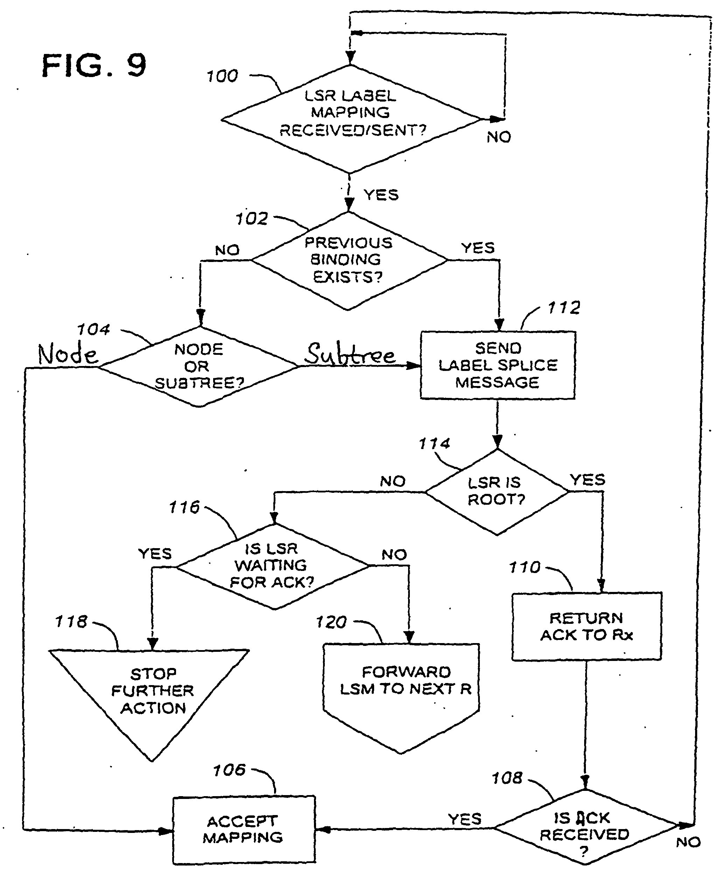

The method of the present invention is illustrated in the flow chart of Figure 9. The method does not depend on the direction of data flow, or the type of multi-protocol label switching tree. However, the loop avoidance method will be described in terms of the label setup procedure and it is noted that the role of the downstream and upstream label switching router in the scheme is reversed for each type (p2mp or mp2p) of MPLS tree.

Initially, at step **100,** the label switching router in a MPLS tree receives (mp2p) or sends (p2mp) a label mapping for a particular FEC. This indicates that a new node is to be attached to the MPLS tree. The label switching router (LSR) then detects, at step**102,** whether or not it has a previous binding for the requested forwarding equivalence class (FEC).

At step **104,** the node determines whether a single node or a subtree is to be attached. If a single node is joining, and the mapping will be for a label for which the LSR has no previous binding, the LSR accepts the label mapping, at step **106,** and receives it if (mp2p) or sends it if (p2mp), as appropriate.

This event can be preceded by upstream router Ru sending a label request to downstream router Rd, as, for example, when Ru initially attempts to set up a label switched path in the egress direction. When a label switched router (LSR) in a MPLS tree determines that it has no previous binding for a particular forwarding equivalence class (FEC), the label mapping is accepted (mp2mp) or sent (p2mp) and no additional new actions are needed.

However, if at step **102,** the label switching router (LSR) determines that it has a previous binding for the forwarding equivalence class (FEC), it sends a "label splice message" (Lsm) towards the root of the MPLS tree, at step **112.** In the event when a label switching router (LSR) receives (mp2p tree), or sends (p2mp tree) a label mapping for a label for which it already has binding, this event may also be preceded by Ru sending a label request to Rd. This may happen when the next hop towards the root changes, i.e. when the Reverse Path Forwarding neighbor changes in the case of multicast or when the forwarding equivalence class (FEC) next hop changes in the case of unicast.

At step **114,** it is determined if the LSR is a root-LSR or not. At step **116,** it is determined if the LSR is awaiting for an ACK message. If the LSR has not received the SPLICE-ACK message and is awaiting a previous SPLICE-ACK message, then all further actions are terminated, step **118**, for avoiding routing loops to be formed in the process. If the LSR has not yet received the SPLICE-ACK message but is not waiting for a previous SPLICE-ACK message, step **120,** the label splice message (Lsm) is forwarded to the next LSR.

If at step **114**, it is determined that the LSR is the root-node, the SPLICE-ACK message is returned to Rx, step **110**, and when received at step **108**, the mapping is accepted. If the SPLICE-ACK message is never received at Rx, the process returns to step **100**.

The loop avoidance mechanism according to the invention, is simple and reliable, requiring less processing compared to prior art loop prevention mechanisms. It can be used with any routing protocol for avoiding loops when constructing point-to-point (p2p), (p2mp), and (mp2p) MPLS trees.
Advantageously, the mechanism of the invention separates the loop-free path verification from the path setup process.

The method of loop avoidance according to the invention is simpler than the colored thread algorithm. The prevention of label request message looping functionality is performed through the LDP functionalities which already has a method to prevent label request message looping, when the present invention is used in conjunction with the LDP loop detection mechanism. Due to the separation of the label mapping phase from the label splicing phase, in some cases more messages would be required than the colored thread algorithm when a route changes. However, the cost would be acceptable, since the label splice messages are always forwarded toward the root of the tree regardless of whether the MPLS tree is (p2mp) or (mp2p) and can be merged at each branch of the MPLS tree.

Due to the fact that the label splicing message (Lsm) itself has no special information for loop prevention other than the FEC and the label, the method according to the invention does not have a functionality to explicitly "detecting" label switched path loops. However, the main objective of loop prevention in the present invention is not to detect a label switched path loop, but to prevent an label switched path from forming a loop at the time the MPLS tree is constructed.

When the present invention is used in conjunction with the LDP loop detection mechanism, some LSRs are performing the loop avoidance method while other LSRs are performing conventional loop detection based on path vectors.

Suppose that Ru and Rd are LDP peers, and Ru and Rd are performing the loop prevention and loop detection, respectively. Ru never sends a label splicing message to Ru. On the other hand, Ru may receive a label mapping message with a path vector but without a hop count from Rd. If Ru does not forward the label mapping message including a path vector to upstream label switching routers, there is a possibility of forming an label switched path loop since the information needed for loop detection is completely lost.

In order to avoid this kind of interoperability problem, a LSR which performs the proposed loop avoidance scheme must also perform the procedures required for the LDP loop detection when it receives a label request or a label mapping message containing a path vector.

When a LSR receives a label request message with a path vector, it adds its own address to the path vector and forwards the label request message with the path vector to the downstream LSR, unless a looping label request message is detected.

On the other hand, when a LSR receives a label mapping message with a path vector, it adds its own address to the path vector and forward the label mapping message with the path vector to each of the upstream label switching routers (LSR), unless a label switched path loop is detected. The LSR may also originate a label splicing message as a result of receiving/sending the label mapping message. In this case, label switching between incoming and outgoing labels is kept pending until it receives a SPLICE-ACK for the label splice message (Lsm).

If a label switching router Rd performing the proposed loop avoidance scheme receives a label splice message (Lsm) from Ru and the next hop label switching router (LSR) to the root of the MPLS tree is not performing the proposed loop avoidance scheme, Rd should immediately return a SPLICE-ACK to Ru instead of forwarding the label splice message further.

The new LDP TLVs (Type, Length, Value) required for the Label Splice Message (Lsm) contains the Lsm type, the message length, message ID, the address of the label switching router which originates the label splice message (Lsm), the FEC TLV and the Label TLV.

The Label Splice Acknowledgment Message contains the Label Splice Acknowledgment Message type, the message length, message ID, the address of the LSR which originates the splice message, the FEC TLV and the Label TLV.

Some changes in LDP Common Session Parameters TLV are necessary. A new one-bit field is defined in Common Session Parameters TLV as "P" for indicating whether loop prevention is enabled. A value of 0 means loop prevention is disabled; a value of 1 means that loop prevention is enabled. When P-bit is set to 1, D-bit must also be set to 1. No label splice message is sent to an LDP peer from which a Common Session Parameters TLV is received with P-bit=0.

The above-described embodiments of the invention are intended to be examples of the present invention and alterations and modifications may be effected thereto, by those of skill in the art, without departing from the scope of the invention which is defined solely by the claims appended hereto.

## Claims

1. A method for preventing routing loops from forming when grafting a joining node to a multi-protocol label switching (MPLS) tree, **characterized by** that the method comprises:
a) obtaining at a label switching router (LSR) a label mapping for a forwarding equivalence class (FEC) (100);
b) determining if previous bindings exist for said FEC, where if yes, go to step c), and if no, go to step h) (102);
c) sending a label splice message (Lsm) from said LSR toward the root node of the MPLS tree (112);
d) determining if said LSR is a root-LSR or not, where if yes, go to step e) and if no, go to step i) (114);
e) returning a label splice acknowledgment (SPLICE-ACK) message to said LSR (110);
f) determining if said SPLICE-ACK message is received, where if yes, go to step g), and if not, go to step a) (108);
g) accepting said label mapping (106);
h) determining if said joining node is a single node or a node of a substree, where said joining node is a single node, go to step g), and if said joining node is a node of a subtree, go to step c) (104);
i) determining if said LSR is waiting for a previous SPLICE-ACK message where if yes, go to step j), and if no, go to step k) (116);
j) terminating any further action (118); and
k) forwarding said Lsm to a next LSR (120).

2. The method of claim 1, wherein said MPLS tree is a unidirectional shared tree.

3. The method of claim 2, wherein said root of said unidirectional shared tree is an ingress node of said unidirectional shared tree if the core node is not included in said unidirectional shared tree.

4. The method of claim 1, wherein said MPLS tree is a source tree.

5. The method of claim 4, wherein said root of said source tree is an ingress node of said source tree.

6. The method of claim 1, wherein said MPLS tree is a bidirectional shared tree.

7. The method of claim 6, wherein said root of said bidirectional shared tree is the node closest to the core if said core node is not included in said bidirectional shared tree.

8. The method of claim 1, wherein said MPLS tree is a multipoint to point tree.

9. The method of claim 1, wherein said MPLS tree is a point to multipoint tree.

10. The method of claim 1, wherein while waiting for SPLICE-ACK message there is a new Lsm at said node, the following substeps are performed after step (c):
- merging label mapping requests;
- sending said new Lsm after receiving SPLICE-ACK.

## Patentansprüche

1. Verfahren zum Verhindern der Bildung von Routing- oder Pfadlenkungsschleifen beim Anheften eines beitretenden Knotens an einen Multiprotokoll-Etikettvermittlungs- (MPLS-) Baum, **dadurch gekennzeichnet, dass** das Verfahren Folgendes umfasst:
a) an einem Etikettvermittlungs-Router (LSR), Gewinnen einer Etikettverknüpfung für eine Weiterleitungs-Äquivalenzklasse (FEC) (100);
b) Feststellen, ob eine vorhergehende Bindung für diese FEC existiert, wenn ja, gehe zum Schritt c), und wenn nein, gehe zum Schritt h) (102);
c) Senden einer Etikett-Spleiß-Mitteilung (Lsm) von dem LSR in Richtung auf den Wurzel-Knoten des MPLS-Baumes (112);
d) Feststellen, ob der genannte LSR ein Wurzel-LSR ist, oder nicht, wenn ja, gehe zum Schritt e), und wenn nein, gehe zum Schritt i) (114);
e) Zurückliefern einer Etikett-Spleiß-Bestätigungs- (SPLICE-ACK-) Mitteilung an den LSR (110);
f) Feststellen, ob die SPLICE-ACK-Mitteilung empfangen wurde, wenn ja, gehe zum Schritt g), und wenn nein, gehe zum Schritt a) (108);
g) Akzeptieren der Etikettverknüpfung (106);
h) Feststellen, ob der beitretende Knoten ein einzelner Knoten oder ein Knoten eines Teil-Baumes ist, wenn der beitretende Knoten ein einzelner Knoten ist, gehe zum Schritt g), und wenn der beitretende Knoten ein Knoten eines Teil-Baumes ist, gehe zum Schritt c) (104);
i) Feststellen, ob der LSR auf eine vorhergehende SPLICE-ACK-Mitteilung wartet, wenn ja, gehe zum Schritt j), und wenn nein, gehe zum Schritt k) (116);
j) Beenden jeder weiteren Aktion (118); und
k) Weiterleiten der Lsm zu einem nächsten LSR (120).

2. Verfahren nach Anspruch 1, bei dem der MPLS-Baum ein einseitig gerichteter gemeinsam genutzter Baum ist.

3. Verfahren nach Anspruch 2, bei dem die Wurzel des einseitig gerichteten gemeinsam genutzten Baumes ein Eintrittsknoten des einseitig gerichteten gemeinsam genutzten Baumes ist, wenn der Kernknoten nicht in dem einseitig gerichteten gemeinsam genutzten Baum enthalten ist.

4. Verfahren nach Anspruch 1, bei dem der MPLS-Baum ein Quellen-Baum ist.

5. Verfahren nach Anspruch 4, bei dem die Wurzel des Quellen-Baumes ein Eintrittsknoten des Quellen-Baumes ist.

6. Verfahren nach Anspruch 1, bei dem der MPLS-Baum ein bidirektionaler gemeinsam genutzter Baum ist.

7. Verfahren nach Anspruch 6, bei dem die Wurzel des bidirektionalen gemeinsam genutzten Baumes der dem Kern nächstgelegene Knoten ist, wenn der Kernknoten nicht in dem bidirektionalen gemeinsam genutzten Baum enthalten ist.

8. Verfahren nach Anspruch 1, bei dem der MPLS-Baum ein Mehrpunkt-zu-Punkt-Baum ist.

9. Verfahren nach Anspruch 1, bei dem der MPLS-Baum ein Punkt-zu-Mehrpunkt-Baum ist.

10. Verfahren nach Anspruch 1, bei dem, wenn beim Warten auf die SPLICE-ACK-Mitteilung eine neue LSM an dem Knoten auftritt, die folgenden Teilschritte nach dem Schritt (c) ausgeführt werden:
- Zusammenführen von Etikett-Verknüpfungsanforderungen;
- Senden der neuen Lsm nach dem Empfang der SPLICE-ACK.

## Revendications

1. Un procédé pour éviter la formation de boucles de routage lorsqu'on greffe un noeud qui se joint à un arbre de commutation d'étiquettes multiprotocole (MPLS pour "Multi-Protocol Label Switching"), **caractérisé en ce que** le procédé comprend les étapes suivantes :
a) on obtient à un routeur à commutation d'étiquettes (LSR pour "Label Switching Router") un plan d'étiquettes pour une classe d'équivalence d'acheminement (FEC pour "Forwarding Equivalence Class") (100);
b) on détermine si des liaisons précédentes existent pour cette FEC, et si oui on passe à l'étape c), et sinon on passe à l'étape h) (102);
c) on envoie un message de raccordement d'étiquettes (Lsm pour "Label Splice Message") à partir du LSR vers le noeud racine de l'arbre de MPLS (112);
d) on détermine si le LSR est un LSR racine ou non, et si oui on passe à l'étape e) et sinon on passe à l'étape i) (114);
e) on retourne au LSR (110) un message d'acquittement de raccordement d'étiquettes (SPLICE-ACK);
f) on détermine si le message SPLICE-ACK est reçu, et si oui on passe à l'étape g), et sinon on passe à l'étape a) (108);
g) on accepte le plan d'étiquettes (106);
h) on détermine si le noeud qui se joint est un noeud unique ou un noeud d'un sous-arbre, si le noeud qui se joint est un noeud unique, on passe à l'étape g), et si le noeud qui se joint est un noeud d'un sous-arbre, on passe à l'étape c) (104);
i) on détermine si le LSR attend un message SPLICE-ACK précédent, et si oui on passe à l'étape j), et sinon on passe à l'étape k) (116);
j) on met fin à toute action ultérieure (118); et
k) on achemine le Lsm vers un LSR suivant (120).

2. Le procédé selon la revendication 1, dans lequel l'arbre de MPLS est un arbre partagé unidirectionnel.

3. Le procédé selon la revendication 2, dans lequel la racine de l'arbre partagé unidirectionnel est un noeud d'entrée de l'arbre partagé unidirectionnel, si le noeud de coeur n'est pas inclus dans l'arbre partagé unidirectionnel.

4. Le procédé selon la revendication 1, dans lequel l'arbre de MPLS est un arbre de source.

5. Le procédé selon la revendication 4, dans lequel la racine de l'arbre de source est un noeud d'entrée de l'arbre de source.

6. Le procédé selon la revendication 1, dans lequel l'arbre de MPLS est un arbre partagé bidirectionnel.

7. Le procédé selon la revendication 6, dans lequel la racine de l'arbre partagé bidirectionnel est le noeud le plus proche du coeur si le noeud de coeur n'est pas inclus dans l'arbre partagé bidirectionnel.

8. Le procédé selon la revendication 1, dans lequel l'arbre de MPLS est un arbre multipoint à point.

9. Le procédé selon la revendication 1, dans lequel l'arbre de MPLS est un arbre point à multipoint.

10. Le procédé selon la revendication 1, dans lequel lorsque pendant l'attente du message SPLICE-ACK il y a un nouveau Lsm audit noeud, les sous-étapes suivantes sont accomplies après l'étape (c) :
- on fusionne les demandes de plan d'étiquettes;
- on envoie le nouveau Lsm après avoir reçu le message SPLICE-ACK.
